Europäisches Patentamt

European Patent Office

Office européen des brevets

(11) Numéro de publication: **0 328 473**
A1

## (12) DEMANDE DE BREVET EUROPEEN

(21) Numéro de dépôt: **89480021.8**

(22) Date de dépôt: **03.02.89**

(51) Int. Cl.⁴: **B 23 D 15/06**
// B21C37/28

(30) Priorité: **10.02.88 FR 8801775**

(43) Date de publication de la demande:
**16.08.89 Bulletin 89/33**

(84) Etats contractants désignés:
**BE DE ES GB IT NL**

(71) Demandeur: **BEHOT**
**1925 route de Biot**
**F-06560 Valbonne (FR)**

(72) Inventeur: **BEHOT**
**1925 route de Biot**
**F-06560 Valbonne (FR)**

(54) **Cisaille à viroles pour coudes.**

(57) La présente invention à principalement pour objet de produire des viroles de coudes en feuille par cisaillement, à l'aide d'une carte sans aucune forme de traçage au moyen d'un dispositif comprenant une lame (1) courbe (2) fixée sur une table (3) munie d'un guide (5). Une lame mobile (7) montée sur un porte lames (8) cisaille la feuille (4) mise en butée (17) escamotable, retour assuré par ressort (16). En opérant par un retournement et un cisaillement succesif de la feuille (4) on obtient les viroles (15) de largeur (ℓ) variable suivant le rayon de coude à obtenir.

FIG.1

**Description**

## CISAILLE A VIROLES POUR COUDES

La présente invention concerne un dispositif permettant d'obtenir à la carte par cisaillement à l'aide de jeux de lames appropriés à un diamètre et un angle, des viroles de toutes largeurs pour la fabrication en feuille de coudes à une infinité de rayons.

Ces viroles sont traditionnellement obtenues par le tracé manuel d'une épure pour chaque diamètre, et chaque rayon de coude, de ces épures on obtient des gabarits utilisés pour reproduire manuellement chaque virole.

Le dispositif selon l'invention permet de remédier à cet inconvénient, il comporte en effet une lame fixe dont la courbe est appropriée à un diamètre et un angle donné selon le nombre de viroles que l'on désir obtenir par coude, cette lame est fixée sur une table de travail, sur laquelle on fait glisser la feuille dont la largeur correspond au diamètre à obtenir plus le recouvrement désiré s'il y a lieu.

La feuille à cisailler avance en suivant un guide perpendiculaire à l'axe de coupe et placé latéralement sur la table à un écartement du point de rencontre de la courbe de la lame et de l'axe de coupe de manière à toujours être valable pour tous jeux de lames employés et obtenir le recouvrement désiré.

Une lame mobile fixée sur un porte lames actionné par tous moyens se déplace suivant deux parallèles en gardant un angle constant avec la lame fixe par rapport à un axe perpendiculaire aux deux parallèles et formant bissectrice entre les deux lames de manière à ce que tous les points de la courbe correspondant à la lame fixe se rencontrent et permettent le cisaillement de la feuille.

Après un premier cisaillement on effectue un retournement de la feuille, on la glisse en suivant le guide, on l'appuie sur la butée graduée et réglable, on cisaille à nouveau et l'on obtient la virole.

Par simple réglage de la butée en utilisant la carte on obtient des viroles de différentes largeurs donc des coudes de rayons différents en procédant toujours par retournement de la feuille à chaque cisaillement.

La butée à une position très précise pour toujours être valable quelque soit les lames utilisées. Elle est située perpendiculairement au point de rencontre de l'axe de cisaillement et de la courbe de la lame déterminant ainsi la largeur ($\ell$) de la virole pour le rayon de coude choisi à la carte. La butée est escamotée sous la pression de la lame mobile et revient à sa position antérieure à laide d'un ressort

Il est donné à titre d'exemple no limitatif un mode de réalisation se référant aux dessins ci-annexés.

- La figure 1 représente la vue de dessus du dispositif selon l'invention.

- La figure 2 représente la vue de côté du dispositif selon l'invention.

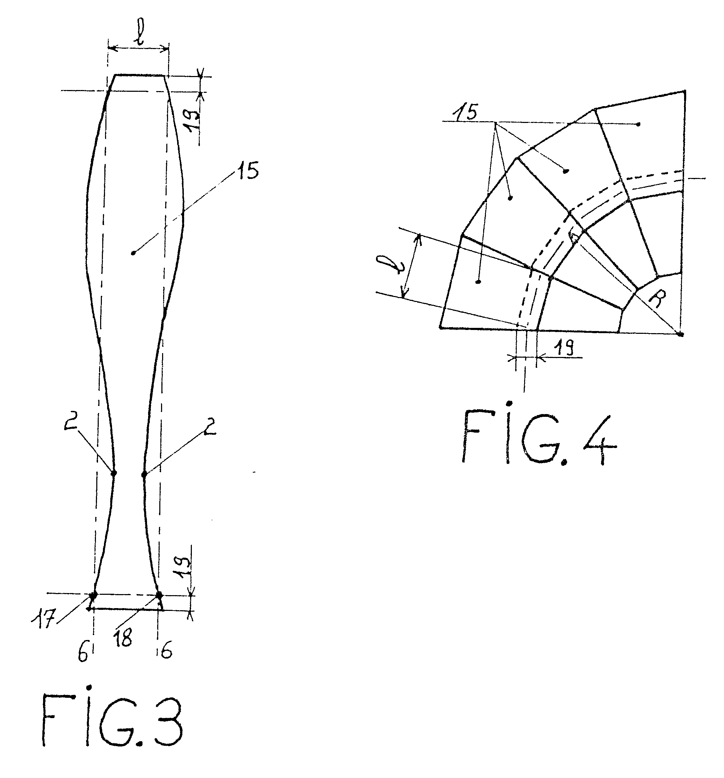

- La figure 3 représente une virole du genre obtenue par ce dispositif.

- La figure 4 représente un coude du genre obtenu à l'aide des viroles.

- La page 3 représente le type de carte utilisé pour la mise en oeuvre des viroles avec le dispositif selon l'invention.

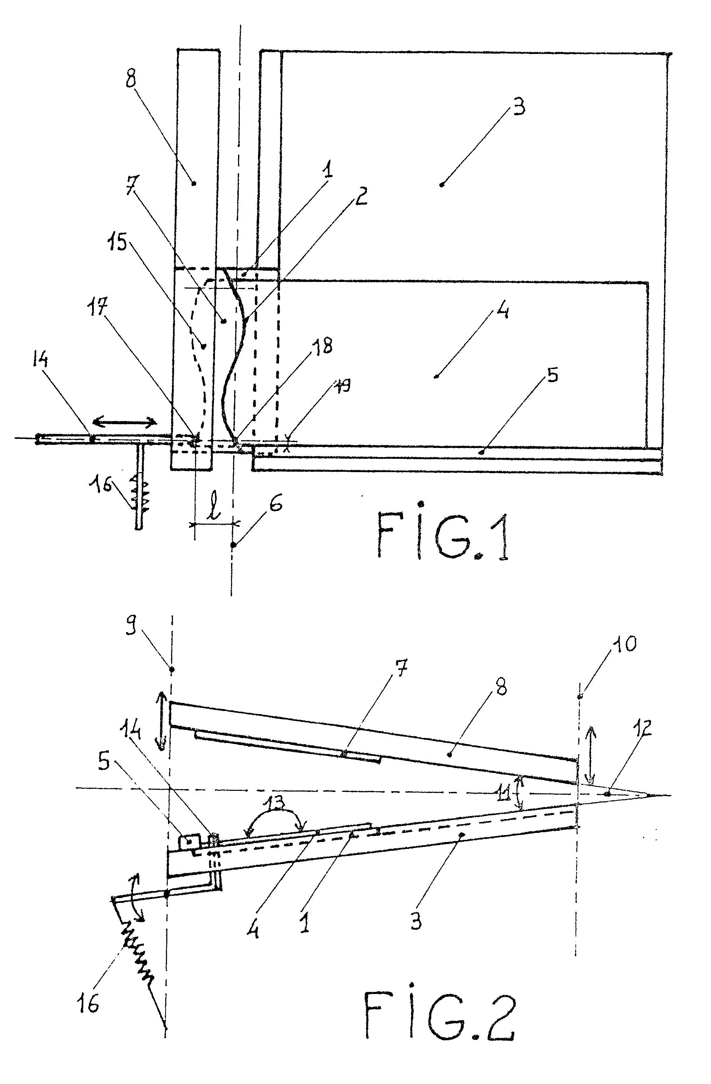

Le dispositif représenté dans la figure 1 et la figure 2 comporte une lame fixe (1) courbe (2) fixée sur une table de travail (3) recevant la feuille à cisailler (4).

Un guide (5) perpendiculaire à l'axe de coupe (6) distant du point (18) selon le recouvrement (19) désiré. Une lame mobile (7) montée sur un porte lames (8) se déplace suivant deux parallèles (9) et (10) en gardant un angle constant (11) avec la lame fixe (1) par rapport à un axe (12) perpendiculaire aux parallèles (9) et (10) et formant bissectrice entre les deux lames (1) et (7).

Par retournement (13) de la feuille (4) qui est mise en butée au point (17) et cisaillée on obtient la virole (15). La butée (14) revient à sa position antérieure à l'aide d'un ressort (16).

Ce point de butée (17) est situé sur une ligne perpendiculaire à l'axe de coupe (6) à l'intersection (18) de la courbe (2) des lames.

La carte représentée page 3 permet de déterminer la largeur ($\ell$) suivant le nombre de viroles (15) et le rayon (R) du coude que l'on désire obtenir.

- example : pour un coude à 90 degrés de rayon R = 135 mm quelque soit son diamètre on choisi première colonne R = 135 mm dans les colonnes suivantes pour trois viroles $\ell$ = 70,5 mm avec jeux de lames 3 viroles $\ell$ = 53 mm avec jeux de lames 4 viroles etc...

Le dispositif suivant l'invention est particulièrement destiné à l'obtention de viroles de coudes pour l'industrie de l'isolation thermique, frigorifique ainsi que l'industrie de la ventilation, climatisation et chaffage.

| COUDES A 90 DEGRES | | | |
|---|---|---|---|
| RAYONS | 3 VIROLES | 4 VIROLES | 6 VIROLES |
| R = mm | L = mm | L = mm | L = mm |
| 80 | 42 | 31,5 | — |
| 85 | 44,5 | 33 | — |
| 90 | 47 | 35 | — |
| 95 | 49,5 | 37 | — |
| 100 | 52 | 39 | — |
| 105 | 55 | 41 | — |
| 110 | 57,5 | 43 | — |
| 115 | 60 | 45 | — |
| 120 | 63 | 47 | 31,5 |
| 125 | 65,5 | 49 | 33 |
| 130 | 68 | 51 | 34 |
| 135 | 70,5 | 53 | 35,5 |
| 140 | 73 | 55 | 36,5 |

**Revendications**

1) Cisaille à viroles de coudes permettant de cisailler à la carte des viroles de coudes en feuille caractérisée en ce qu'elle comporte une lame fixe (1) courbe (2) fixée sur une table de travail (3) comportant un guide (5) une butée (14) placés perpendiculairement à l'axe de coupe et une lame mobile (7) courbe (2) monté sur un porte lames (8).

2) Cisaille selon la revendication 1 caractérisée en ce que la courbe (2) de la lame fixe (1) et la lame mobile (7) à une forme appropriée au diamètre et au nombre de viroles recherchées par coude.

3) Cisaille selon les revendications 1 et 2 caractérisée en ce que la lame mobile (7) se déplace suivant deux parallèles (9) et (10) en gardant un angle constant (11) avec la lame fixe (1) par rapport à un axe (12) perpendiculaire aux deux parallèles (9) et (10) et formant bissectrice entre les deux lames (1) et (7).

4) Cisaille selon la revendication 1 caractérisée en ce que le guide (5) perpendiculaire à l'axe de coupe (6) est distant du point (18) selon le recouvrement (19) désiré.

5) Cisaille selon la revendication 1 caractérisée en ce que le point de butée (17) est situé perpendiculairement sur un axe correspondant au point d'intersection (18) de la courbe (2) et de l'axe de coupe (6).

6) Cisaille selon les revendications 1 et 5 caractérisée en ce que la butée (14) est réglable et permet tous les écartements ($\ell$) à la carte entre les points (17) et (18) suivant le rayon (R) recherché à la carte.

7) Cisaille selon la revendication 1 caractérisée en ce que la butée (14) est escamotable sous l'action de la lame mobile (7).

8) Cisaille selon la revendication 1 caractérisée en ce que la butée (14) est munie d'un ressort (16) qui lui permet de revenir à sa position antérieure.

9) Cisaille selon les revendications précédentes prises dans leur ensemble caractérisée en ce que le retournement (13) de la feuille (4) à chaque cisaillement permet d'obtenir les viroles (15).

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-2 637 541  (STEHLE)<br>--- | 1 | B 23 D  15/06 //<br>B 21 C  37/28 |
| A | DE-A-2 811 494  (KLEIN)<br>--- | | |
| A | US-A-2 815 074  (DEHN)<br>--- | | |
| A | FR-A-2 356 484  (SCHMIDLIN AG)<br>----- | | |

**DOMAINES TECHNIQUES RECHERCHES (Int. Cl.4)**

B 23 D
B 21 D
B 21 C

**Le présent rapport a été établi pour toutes les revendications**

| Lieu de la recherche | Date d'achèvement de la recherche | Examinateur |
|---|---|---|
| LA HAYE | 18-05-1989 | BERGHMANS H.F. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                          

& : membre de la même famille, document correspondant

EPO FORM 1503 03.82 (P0402)